Europäisches Patentamt

European Patent Office

Office européen des brevets

(11) Publication number: **0 423 510 A1**

## EUROPEAN PATENT APPLICATION

(21) Application number: 90118299.8

(22) Date of filing: 24.09.90

(51) Int. Cl.5: **C08K 3/22**, C08K 3/30, C08K 3/34

(30) Priority: 20.10.89 US 424888

(43) Date of publication of application:
24.04.91 Bulletin 91/17

(84) Designated Contracting States:
DE FR GB IT NL

(71) Applicant: GENERAL ELECTRIC COMPANY
1 River Road
Schenectady New York 12305(US)

(72) Inventor: Allen, Joel David
201 Third Street, Apartment 8J
Parkersburgh, West Virginia 26101(US)
Inventor: Champlain, Dennis William
405 Coronado Drive
Mt. Vernon, Indiana 47620(US)
Inventor: Wallace, Lawrence Reed
2117 Hickory Springs Road
Johnson City, Tennessee 37604(US)

(74) Representative: Catherine, Alain
General Electric France Service de Propriété
Industrielle 18 Rue Horace Vernet
F-92136 Issy-Les-Moulineaux Cedex(FR)

(54) Highly dense thermoplastic molding compositions.

(57) Novel thermoplastic compositions are disclosed which comprise a thermoplastic resin and from 20 - 85% by weight of total composition of a filler selected from the group consisting of barium sulfate, zinc oxide, zirconium oxide, zirconium silicate and mixtures thereof.

EP 0 423 510 A1

## HIGHLY DENSE THERMOPLASTIC MOLDING COMPOSITIONS BACKGROUND OF THE INVENTION

Highly filled, dense, thermoplastic based compositions which have ceramic like properties are may be used in applications usually reserved for ceramics or filled thermosets. This is because of the relative ease with which thermoplastics may be fabricated. The applicants have discovered that certain polymers may be combined with exceptionally high levels of inorganic fillers which result in a molding composition which is capable of being molded into articles having ceramic like properties. These polymers are selected from the group consisting of polycarbonates, polyetherimides and copolymers thereof, polycyclohexyl terephthalates and copolymers thereof, polypropyl terephthalates and copolymers thereof, polyethylene terephthalates and copolymers thereof, polyimides, polyestercarbonates, polyphenylene sulfides, polyamides, polyamideimides, polyarylates, polymethylpentene, polysulfones, polyether sulfones, polystyrenes, rubber modified high impact polystyrene, acetals, SAN, SMA, ASA, modified polyphenylene ethers, polyether ketones, ABS, PVC, PFA, ECTFE, ETFE, PVDF, liquid crystal polymers and combinations thereof, which are combined with at 30% - 80% by weight of a filler selected from zinc oxide or barium sulfate, zirconium oxide, zirconium silicate or mixtures thereof.

These compositions may be used to mold useful objects such as tableware, dishes, bowls, mugs and the like which require a smooth surface. In addition, the selection of the proper level of filler will provide a density in the molded article which approaches the density of ceramics.

The compositions of the invention which contain barium sulfate as a filler may be utilized to prepare containers intended for use in microwave cooking.

Accordingly, it is an object of this invention to provide novel molding compositions which contain a high level of fillers which will provide a smooth surface.

It is also an object of this invention to provide novel molding compositions which have a high level of fillers which will have a ceramic-like feel and density.

It is also an object of this invention to provide novel molding compositions having special utility for making molded articles.

It is also an object of this invention to provide novel molding compositions which may be employed for making highly dense molded articles.

These and other objects of the invention will become apparent from the present specification.

## SUMMARY OF THE INVENTION

The present invention is concerned with a composition of a resin selected from the group consisting of polycarbonates, polyetherimides and copolymers thereof, polyethylene terephthalate and copolymers theeof, polyestercarbonates, polycyclohexyl terephthalate and copolymers thereof, polypropyl terephthalate and copolymers thereof, polyphenylene sulfides, polyamides, polyamide imides, polyarylates, polysulfone, polyethersulfones, polymethylpentene, polystyrene rubber modified high impact polystyrene, acetals, SAN, SMA, ASA, modified polyphenylene ethers, polyether ketones, ABS, PFA, ECTFE, ETFE, PVDF, liquid crystal polymers and from 30 - 80% by weight of a filler selected from the group consisting of zinc oxide, barium sulfate, zirconium silicate, zirconium oxide and mixtures thereof.

## DETAILED DESCRIPTION OF THE INVENTION

The resins useful in the practice of the invention are well known and are commercially available.

The polycarbonate resin is preferably derived from the reaction of bisphenol-A and phosgene and preferably has a melt flow index of 1 - 75 g./10 min. as measured in ASTM Test method D1238, condition O. The polyphenylene sulfide has recurrent benzene rings that are para substituted with sulfur atom links and having an IV of 0.15 - 0.30 dl/g as measured in 1-chloronaphthalene at 206° C. The polyetherimides are described in U.S. 4,510,289 which is incorporated by reference. The polyamides which may be used include nylon-6; nylon 6,6; nylon-4; nylon-4,6; nylon-12; nylon-6,10; nylon-6,9 or other nylons such as the amorphous nylons.

The polyamides may be obtained by well known processes. For example, nylon-6,6 is a condensation product of adipic acid and hexamethylenediamine and may have a number average weight of about 10,000.

Polyphenylene ether resins and modified polyphenylene ether resins are commercially available and are described in U.S. 3,306,874, U.S. 3,306,875 and U.S. 3,383,435 all of which are incorporated by reference. The preferred modified polyphenylene ether resin is a combination of poly(2,6-dimethyl-1,4-phenyllene)oxide and a rubber modified high impact styrene.

The polyamideimides, polyarylates, polyethylene terephthalates and their copolymers, polyimides, polyestercarbonates, polyphenylene sulfides, polyamides, polyamideimides, polyarylates, polymethylpentenes, polyethersulfones, acetals, SAN, SMA, ASA, polyetherketones, ABS, PVC, PFA, ECTFE, ETFE, PVDF and liquid crystal polymers are known and many of these polymers are described in the Modern Plastics Encyclopedia, 1988 Ed. pp. 1 - 124, which are incorporated by reference.

The zinc oxide may be in the form of zincite or as synthetically produced white zinc oxide produced by the indirect French process using zinc metal or metallic residues or the American process using zinc residues or by a wet chemical process. A finely divided form is preferred which has an average particle diameter of 0.05 - 50 microns, preferably 0.1 - 5 microns and most preferably about 1.5 microns.

The barium sulfate may be in the form of naturally occuring barytes or as synthetically derived barium sulfate using well known synthetic techniques. The particle size may vary from 0.1 to 50 microns, preferably from 1 to 15 microns and most preferably 8 microns.

The zirconium oxide occurs as baddeleyite or it may be prepared using well known procedures. A particle size of 0.1 - 50 microns may be utilized. Zirconium silicates may be employed as zircon or as the synthetically derived material having a particle size of 0.1 - 50 microns.

In most applications, the zinc oxide, barium sulfate, zirconium oxide zirconium silicates or mixtures thereof may be employed alone. All of these materials or any two of these materials may be used in combination. In addition, in place of the individual or combinations of these fillers, one may utilize up to 50% by weight of the total filler contents and more preferably 15% by weight may be replaced with an inorganic filler, such as alumina, amorphous silica, anhydrous aluminum silicate, barium ferrite, calcium carbonate, mica, feldspar, clays such as kaolin, talc magnesium oxide, magensium silicate, nepheline syenite, phenolic resins, glass microspheres, wollastonite, titanium dioxide, ground quartz and the like.

The molding compositions may include a resin selected from the group set forth hereinabove with from 20 - 85% by weight, preferably 30 - 75% by weight or most preferably 30 - 45% by weight of total composition of the filler component. For certain applications where a ceramic like product is desired, more than 50% or more preferably 60 - 85% by weight of total composition of filler component should be employed.

Preferred compositions will have 25 - 65% by weight of total composition of a resin selected from the group consisting of polycarbonates, polyamides, polyphenylene sulfides and polyetherimides or a mixture thereof and 30 - 75% by weight of total composition of a filler selected from zinc oxide and barium sulfate.

A preferred composition for making a thermoplastic substitute for cast phenolic resins for use in applications such as the fabrication of billiard balls consists essentially of from 20 - 45% by weight of total composition of a polycarbonate resin; from 20 -45% by weight of total composition of polybutylene terephthalate from 20 - 45% by total weight of composition of zinc oxide; and from 0.1 - 10% by weight of total composition of an antioxidant.

Certain compositions are highly dense and will have a density of above 2.0 and even above 2.5 depending on the level of loading of the filler.

The invention also includes compositions of 40 - 50% by weight of total composition of polybutylene terephthalate; 15 - 30% by weight of total composition of an engineering TPS and 30 - 50% by weight of total composition of zinc oxide.

The external lubricants function as mold release agents and the particular material is not critical. The external lubricants will include compounds having a long non-polar backbone such as a carbon chain of 12 - 60 carbons. Examples include fatty acids; various esters including fatty esters, wax esters, glycerol esters, glycol esters, fatty alcohol esters, fatty alcohols, fatty amides, metallic stearates; and waxes. Those materials are described in Modern Plastics Encyclopedia, 1988 Edition, p. 162, which is incorporated by reference.

The additive pentaerythritol tetrastearate is a dispersing agent for the barium sulfate, zinc oxide, zirconium oxide zirconium silicate or mixtures thereof in the base resin and will also function as an external lubricant or mold release agent.

Suitable antioxidants include phosphites, hindered phenols, secondary amines and the like, which may be added in effective amounts to retard oxidative degration. The preferred antioxidant is tetrakis(methylene-3(3′,5′-di-tert-butyl-4-butyl-4-hydroxyphenyl) propionate)methane.

Flame retardants may be added in effective amounts for molding articles such as wasterpaper baskets which should be flame retardant. Suitable flame retardant agents are disclosed in United States Letters Patent No.s 4,785,592; 3,334,154 and 4,020,124.

Other additive polymers which are compatible with the particular resin which is used may be added to the blend in amounts which are less than 50% by weight of the total amount of resin. These polymers may be utilized alone or in combination at levels which are compatible with the resin and filler. Generally, it will be preferred to limit the amount of the additive polymer to less than 30% by weight of total amount of resin and most preferably about 10% by weight of total resin. Suitable thermoplastic polymer resins include polybutylene terephthalate or branched copolymers thereof, polypropylene terephthalate and copolymers thereof; polycyclohexyl terephthalate and copolymers thereof; polyolefins such as high density polyethylene, (d = above 0.94) low density polyethylene (d = about 0.92) linear low density polyethylene (d = 0.916 -0.940) or polypropylene; EPDM; ethylene-vinyl acetate copolymers; EEA; engineering TPEs; olefin TPEs and polyurethane TPEs; elastomeric alloy TPEs; acrylics; methacrylics; thermoplastic elastomerics such as AB block copolymers; olefin modified SAN; ABS; SAN, SMA and the like provided that if the additive polymer listed above is the same as the base resin, it is understood that particular additive polymer is to be excluded from that particular composition. These materials are well known and are described in Modern Plastics Encyclopedia, 1988 Edition, pp. 1-109, which are incorporated by reference.

The polyetherimide esters are described in U.S. 4,544,734 and the polyether imides are disclosed in U.S. 4,510,289, both of which are incorporated by reference. The ASA polymers are disclosed in U.S. 3,944,631 which is incorporated by reference.

The composition may be prepared by tumble blending the powdered components, extruding the blend, chopping the extrudate and thereafter fabricating tne composition using conventional procedures such as injection molding, blow molding, thermoforming and the like.

It is preferred to use a devolatizing extruder although other types of mixing equipment may be employed.

When molding the composition of the invention, the surface properties can be optimized by increasing the mold or melt temperature, e.g. a mold temperature of 120° F - 240° F and melt temperature from 500° F - 580° F may be of use for polycarbonates. The molecular weight of particular polymers may require different temperatures for optimum surface properties.

If desired, fiberglass reinforcing fillers may be added as well as pigments, ultraviolet stabilizers, impact modifiers, metal additives for electromagnetic radiation shielding such as nickel coated grapnite fibers, antistatic agents, coupling agents such as amino silanes and the like.

If a fiberglass reinforcing filler is used, a level of 1 - 45% by weight of total composition may be used or more preferably 5 - 15%.

Materials suitable for use as impact modifiers include SBR, AB and ABA block copolymers such as Kraton and Kraton-G; styrene-butadiene modified acrylics; acrylic modifiers such as EXL 2330; core shell acrylics such as EXL 2691; EVA and EEA polymers. These and other impact modifiers are described in United States Letters Patents No. 4,034,013; 4,096,202 and 4,180,494 and in Modern Plastics Encyclopedia; 1988 Edition, p. 160, which are incorporated by referenced. Effective amounts range from 1 - 20% by total weight of composition.

## EXAMPLE 1

A composition having the following components is prepared by tumble blending the components, extrusion through a devolatilizing, 2½" diameter, single screw, HPM extruder at a melt temperature of 600° F. The composition is dried and molded on an 80 ton Van Dorn injection molding machine with a 3.5 ounce barrel, melt temperature of 575° F, and a mold temperature of 250° F.

|  | 1 |
|---|---|
| polyphenylene sulfide[1] | 40.0 |
| barium sulfate (3 micron average particle size from Pfizer) | 60.0 |
| Izod impact, notched; ft.lbs/in | 0.5 |
| Izod impact, unnotched; ft.lbs/in | 6.9 |
| Tensile Elongation; % | 2.7 |
| Tensile Strength; psi | 7895 |
| Flexural Strength; psi | 21410 |
| Flexural Modulus; psi | 1393000 |
| Specific Gravity | 2.27 |
| Heat Distortion Temperature at 264 psi; °F | 301 |

1 = Melt Viscosity at 315°C is 3000 poise

The tensile elongation for this material is surprisingly high when compared to PPS resin, where PPS resin is generally 1.0%.

## EXAMPLE 2

The following composition is prepared using the general procedure of Example 1, except the melt temperature during extrusion and molding was 700°F, and the mold temperature is 250°F:

|  | 2 |
|---|---|
| polyetherimide[1] | 40.0 |
| barium sulfate (3.0 micron average particle size from Pfizer) | 60.0 |
| Izod impact, notched; ft.lbs/in | 0.5 |
| Izod impact, unnotched; ft.lbs/in | 2.4 |
| Tensile Elongation; % | 3.0 |
| Tensile Strength; psi | 10670 |
| Flexural Strength; psi | 19340 |
| Flexural Modulus; psi | 1156000 |
| Specific Gravity | 2.25 |
| Heat Distortion Temperature at 264 psi; °F | 399 |

1 = ULTEM 1010 Polyetherimide, with M.I. of 18 g/10 min at 343°C, 6.7 kg weight (total), 0.0825 inch diameter orifice.

## EXAMPLE 3

The following composition is prepared using the general procedure of Example 1, except the melt temperature during extrusion and molding is 550°F, and the mold temperatures 150°F:

|  | 3 | 3A |
|---|---|---|
| polycarbonate[1] | 40.0 | 58.5 |
| barium sulfate (3 micron average particle size from Pfizer) | 60.0 | - |
| zinc oxide (0.3 micron av. particle size from Zinc Corp.) | - | 41.2 |
| antioxidant (Irganox 1010)[2] | - | 0.1 |
| antioxidant (Irgafos 168)[3] | - | 0.1 |
| pentaerythritol tetrastearate | - | 0.1 |
| Izod impact, notched; ft.lbs/in | 0.4 | 0.6 |
| Izod impact, unnotched; ft.lbs/in | 3.2 | 23.1 |
| Tensile Elongation; % | 3.2 | - |
| Tensile Strength; psi | 8220 | 9810 |
| Flexural Strength; psi | 13150 | 17160 |
| Flexural Modulus; psi | 850000 | 576500 |
| Specific Gravity | 2.10 | 1.79 |
| Heat Distortion Temperature at 264 psi; °F | 302 | - |

1 = Example 3 utilizes LEXAN 121 Polycarbonate, with MI of 16.5 gm/10 min., ASTM Test Method D1238, condition O. Example 3A utilizes LEXAN 141 Polycarbonate, with MI at 9.5 gm/10 min by same ASTM test method.

2 = Irganox 1010 tetrakis(methylene-2(3´5´-di-tert-butyl-4-hydroxyphenol)propionate)methane.

3 = Irgafos 168 is tris (2,4-tert-butylphenyl) phosphite.

## EXAMPLE 4

The following composition is prepared using the general procedure of Example 1, except melt temperature during extrusion and molding is 500°F, and the mold temperature is 150°F.

|  | 4 |
|---|---|
| polyamide[1] | 40.0 |
| barium sulfate (3.0 micron average particle size from Pfizer) | 60.0 |
| Izod impact, notched; ft.lbs/in | 0.4 |
| Izod impact, unnotched; ft.lbs/in | 5.4 |
| Tensile Elongation; % | 3.3 |
| Tensile Strength; psi | 9725 |
| Flexural Strength; psi | 16190 |
| Flexural Modulus; psi | 861000 |
| Specific Gravity | 2.0 |
| Heat Distortion Temperature at 264 psi; °F | 303 |

1 = Monsanto's Vydyne 21X Nylon 6/6

## EXAMPLE 5

| EXAMPLE 5 | | | | |
|---|---|---|---|---|
| | 5 | 5A | 5B | Comparative A |
| polycarbonate[1] | 15.5 | 30.0 | - | - |
| polyetherimide ester elastomer [2] | 10.0 | - | 20.0 | - |
| polybutylene terephthalate[3] | 37.5 | 32.0 | 44.4 | 65.6 |
| zinc oxide (0.3 micron average particle size from Zinc Corp. of America) | 36.9 | 37.4 | 35.5 | 34.3 |
| antioxidant (Irganox 1010) | 0.1 | 0.1 | 0.1 | 0.1 |
| zinc phosphate | 0.5 | 0.5 | - | - |
| Izod impact, notched; ft.lbs/in | 1.0 | 0.4 | 0.6 | 0.4 |
| Izod impact, unnotched; ft.lbs/in | 23.4 | No Break | 9.6 | 2.9 |
| Tensile Strength; psi | 6640 | 8800 | 5950 | 5530 |
| Flexural Strength; psi | 11700 | 15130 | 10070 | 9980 |
| Flexural Modulus; psi | 359800 | 542500 | 327200 | 469900 |
| Specific Gravity | 1.76 | 1.76 | 1.76 | 1.76 |
| Part Drop Impact Test[4] | Cracked | No Break | Broke | Shattered |

1 = LEXAN 141 Polycarbonate, MI = 9.5 g/10 min per ASTM Test Method D1238, condition O.

2 = Example 5 utilized LOMOD J10 polyetherimideester elastomer, with a flexural modulus of 10,000 psi. Example 5B utilized LOMOD J50 polyetherimideester elastomer, with a flexural modulus of 50,000 psi.

3 = VALOX 295 PBT, with an IV = 0.78 dl/g at 25°C, in 60:40 mixture of phenol tetrachloroethane

4 = Part Drop Impact Test consisted of molding parts into $2\frac{1}{4}$ " spheres, and dropping from a heght of 10 feet onto a concrete surface.

It is surprising, and not expected that the spheres of Example 5A passed the Part Drop Impact Test. This composition is suitable for the molding of billiard balls.

## Claims

1. A thermoplastic molding composition which comprises:
    (a) a resin selected from the group consisting of polycarbonates, polyethylene terephthalate and copolymers thereof, polypropylene terephthalate and copolymers thereof, polycyclohexylterephthalate and copolymers thereof, polyetherimides, polyphenylene sulfides, polyamides, polyamide imides, polyarylates, polyethersulfones, polystyrenes, acetals, SAN, SMA, ASA, modified polyphenylene ethers, polyether ketones, ABS, PVC, PFA, ECTFE, ETFE, PVDF and liquid crystal polymers;
    (b) and from 20 - 85% by weight of total composition of a filler selected from zinc oxide, barium sulfate, zirconium oxide, zirconium silicate and mixtures thereof.

2. A molding composition as defined in Claim 1 which includes from 30 - 75% by weight of total composition of zinc oxide.

3. A molding composition as defined in Claim 1 which includes from 30 - 75% by weight of total composition of barium sulfate.

4. A molding composition as defined in Claim 1 which includes from 30 - 75% by weight of total composition of zirconium oxide.

5. A molding composition as defined in Claim 1 which includes fro 30 - 75% by weight of total composition of zirconium silicate.

6. A molding composition as defined in Claim 2 which includes a polycarbonate resin derived from bisphenol-A.

7. A molding composition as defined in Claim 3 which includes a polycarbonate resin derived from bisphenol-A.

8. A molding composition as defined in Claim 2 which includes a polyphenylene sulfide resin.

7

9. A molding composition as defined in Claim 3 which includes a polyphenylene sulfide resin.

10. A molding composition as defined in Claim 2 which includes a polyamide resin.

11. A molding composition as defined in Claim 3 which includes a polyamide resin.

12. A molding composition as defined in Claim 2 which includes a polyetherimide resin.

13. A molding composition as defined in Claim 3 which includes a polyetherimide resin.

14. A molding composition as defined in Claim 1 which includes a 30 - 75% by weight of total composition of filler.

15. A molding composition as defined in Claim 1 which includes 30 - 75% by weight of total composition of filler.

16. A molding composition as defined in Claim 1 which includes an external lubricant.

17. A molding composition as defined in Claim 1 which includes an antioxidant.

18. A molding composition as defined in Claim 1 which consists essentially of:

a) from 25 - 70% by weight of total composition of a resin selected from the group cosisting of polycarbonates, polyamides, polyphenylene sulfides polyetherimides or mixtures thereof;

(b) from 30 - 75% by weight of total composition of a filler selected from the group consisting of zinc oxide and barium sulfate.

19. A molding composition as defined in Claim 18 wherein the filler is barium sulfate.

20. A molding composition as defined in Claim 18 wherein the filler is zinc oxide.

21. A molding composition as defined in Claim 18 which also includes from 0.01 - 5% by weight of total composition of an external lubricant.

22. A molding composition as defined in Claim 18 which includes from 0.01 to 5% by weight of total composition of an antioxidant.

23. A molding composition as defined in Claim 21 which includes from 0.01 to 5% by weight of total composition of an antioxidant.

24. A molding composition as defined in Claim 1 which includes a flame retardant amount of a flame retardant.

25. A molding composition as defined in Claim 18 which includes a flame retardant amount of a flame retardant.

26. An article molded from the composition of Claim 1.

27. A molding composition as defined in Claim 1 which includes from 1 - 45% by weight of total composition of fiberglass.

28. A molding composition as defined in Claim 1 which includes an effective amount of an impact modifier.

29. A molding composition as defined in Claim 1 which includes less than 50% by weight of total resins in the composition of an additive polymer.

30. A molding composition which consists essentially of

a) from 20 - 45% by weight of total composition of a polycarbonate resin;

(b) from 20 - 45% by weight of total composition of a polybutylene terephthalate resin;

(c) from 20 - 45% by weight of total composition of zinc oxide;

(d) from 0.1 - 10% by weight of total composition of an antioxidant.

## European Patent Office

# EUROPEAN SEARCH REPORT

Application Number

## EP 90 11 8299

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DATABASE WPIL, no. 86-004376, Derwent & JP-A-60231763 (CALP KOGYO KK) 18-11-1985 * abstract * | 1-30 | C 08 K 3/22 C 08 K 3/30 C 08 K 3/34 |
| X | US-A-4 474 922 (J. BLACKWELL) * claims, examples * | 1-28 | |
| X | JP-A-6 225 246 (CALP KOGYO KK) * examples 37 and 39 * | 1-28 | |
| X | JP-A-1 110 561 (CALP KOGYO KK) * examples 1-3 and 27-42 * | 1-28 | |

TECHNICAL FIELDS
SEARCHED (Int. Cl.5)

C 08 K
C 08
L

The present search report has been drawn up for all claims

| Place of search | Date of completion of search | Examiner |
|---|---|---|
| The Hague | 30 January 91 | HOFFMANN K.W. |